## Europäisches Patentamt
## European Patent Office
## Office européen des brevets

(19)

(11) Veröffentlichungsnummer: **0 127 032**
**A2**

(12) ## EUROPÄISCHE PATENTANMELDUNG

(21) Anmeldenummer: **84105310.1**

(22) Anmeldetag: **10.05.84**

(51) Int. Cl.³: **A 23 B 4/02**

(30) Priorität: **27.05.83 CH 2914/83**

(43) Veröffentlichungstag der Anmeldung:
**05.12.84 Patentblatt 84/49**

(84) Benannte Vertragsstaaten:
**AT DE FR GB IT NL**

(71) Anmelder: **Max Hübner AG**
**Rosmattstrasse 11**
**CH-5620 Zufikon(CH)**

(72) Erfinder: **Hübner, Max**
**Rosmattstrasse 11**
**CH-5620 Zufikon(CH)**

(74) Vertreter: **Patentanwaltsbureau Scheidegger, Zwicky & Co.**
**Stampfenbachstrasse 48 Postfach**
**CH-8023 Zürich(CH)**

(54) **Vorrichtung zum Einspritzen von Flüssigkeit in tierische Körper.**

(57) Die Vorrichtung weist einen mittels einer vertikalen Welle (3) angetriebenen waagerechten Drehtisch (4) auf, der umfangsmässig verteilt muldenartige Unterlagen (6) zur Aufnahme je eines zu spritzenden tierischen Körpers trägt. Mit dem Drehtisch (4) zusammen bewegt sich ein oberhalb des Drehtisches verschwenkbarer Support (11), der durch ein Hebelsystem (8) und einen Wälzkörper (9), der an einer Kurvenscheibe (10) abrollt, gesteuert ist und während des Umlaufs verschiedene Schwenkstellungen einnimmt. Der Support (11) trägt eine Mehrzahl von Führungen (15) für durch Federkraft aus der Führung ausfahrbare Einspritznadeln (16). Diese Einspritznadeln (16) werden durch einen Bowdenzug (20) gesteuert ausgefahren und wieder zurückgezogen. Die Steuerung erfolgt durch eine am Ende des Bowdenzuges angeordnete, zusammen mit der Welle (2) umlaufende Halterung (24), die mittels an einer Steuerschiene (27) abrollender Wälzkörper (26) während der Umlaufbewegung des Drehtisches (4) hin-und herbewegt wird und den Bowdenzug (20) betätigt. Eine jedem der in Mehrzahl vorhandenen Supporte (11) jeweils zugeordnete, ebenfalls umlaufende Pumpe (30), die über Leitungen (36, 37, 38) mit den Einspritznadeln (16) verbunden ist, wird ebenfalls durch eine Steuerschiene (33) mittels an dieser abrollender und mit der Kolbenstange (31) der Pumpe (30) vebundener Wälzkörper (32) gesteuert und ermöglicht eine genaue Dosierung der Einspritzmenge durch Veränderung der Exzentrizität der ringförmigen Steuerschiene (33). Die einzeln oder paarweise verschwenkbar einstellbaren Einspritznadeln (16) erlauben eine gezielte Einspritzung, insbesondere zum Spritzen gesonderter Fleischpartien von Geflügel.

./...

Croydon Printing Company Ltd

EP 0 127 032 A2

Fig 1

# Vorrichtung zum Einspritzen von Flüssigkeit in tierische Körper

Die Erfindung betrifft eine Vorrichtung zum Einspritzen von Flüssigkeit, wie beispielsweise Lake, in tierische Körper mittels Einspritznadeln, die relativ zu dem auf einer Unterlage abgestützten tierischen Körper bewegt werden.

Bekannte Vorrichtungen dieser Art, die als Pökelspritzmaschinen bezeichnet werden, weisen als Unterlage für den tierischen Körper ein geradlinig bewegtes, vorzugsweise endloses und an den Enden der Förderstrecke umgelenktes Förderband und eine Vielzahl von mittels eines starren Rahmens quer zur Vorschubrichtung des Förderbandes auf- und abbewegbaren Einspritznadeln auf. Die Verteilung der Lake in dem tierischen Körper und die Einspritzmenge lassen sich mit den bekannten Pökelspritzmaschinen nur in einem begrenzten Ausmass regeln. Man kann den Einspritzdruck variieren und ist dabei wegen der Gefahr der Zerstörung der Fleischfaser bei zu hohem Druck an Grenzen gebunden. Man kann ferner die Stichfolge in der Vorschubrichtung verändern und muss auch dabei beachten, dass bei zu enger Stichfolge die Lake aus einem vorangehenden Einspritzloch wieder austreten kann. Schliesslich lässt sich auch durch Aenderung der Hubgeschwindigkeit der Einspritznadeln die Verweildauer derselben im Fleisch und damit die Einspritzmenge regeln oder es kann in Abhängigkeit von der durch Fühler gemessenen Dicke des zu spritzenden Fleischstückes über eine steuerbare Ventileinrichtung jeweils ein Zeitintervall für das Einspritzen eingestellt werden. .

0127032

In jedem Fall bleibt aber bei der bekannten Pökelspritzmaschine, mit der vorwiegend Teile von tierischen Körpern
wie beispielsweise Schinken gespritzt werden, der Nachteil bestehen, dass die Menge der einzuspritzenden Lake
pro Volumen- oder Gewichtseinheit des Fleisches nicht
genau dosiert werden kann, weil die Fleischstücke von
sehr unregelmässiger Gestalt sind und Knochen enthalten,
sodass einige der Einspritznadeln auf Knochen stossen
und andere Einspritznadeln ins Leere stossen, wodurch
die Menge der pro Nadelhub eingespritzten Lake unbestimmt wird, weil nicht alle Einspritznadeln gleichmässig daran beteiligt sind. Man kann ferner auch nicht
unterhalb von Knochen liegende Fleischpartien erreichen,
sodass man bei nicht zufriedenstellendem Ergebnis die
Fleischstücke gewendet ein zweites Mal spritzen muss.

Die vorstehend beschriebenen Nachteile erweisen sich
als besonders ungünstig, wenn man auf einer herkömmlichen Pökelspritzmaschine Geflügel spritzt, das zahlreiche auch kleine Knochen enthält und von den Eingeweiden befreit einen grösseren Körperhohlraum aufweist,
in den die Nadeln ungewolltermassen auch hineinspritzen
und der dann in zusätzlicher Arbeit entleert werden
muss. Mit einer herkömmlichen Pökelspritzmaschine
lassen sich daher bei der Behandlung von Geflügel keine
zufriedenstellenden Resultate erzielen, insbesondere
kann in den vorhandenen Fleischpartien wie Schenkel
und Brust keine gleichmässige Verteilung der einzuspritzenden Flüssigkeit erreicht werden, die ausser der
als Lake bezeichneten Zusammensetzung auch jede andere
aus geeigneten Produkten bestehende Zusammensetzung
aufweisen kann.

Die der vorliegenden Erfindung zugrundeliegende Aufgabe
bestand daher darin, einen tierischen Körper gleich welcher Art, insbesondere aber Geflügel genau dosiert spritzen zu
können, unter genauer Festlegung des Einstichpunktes und
der Einstichtiefe bei jeder der verschiedenen Fleischpartien und unter Aussparung der vorwiegend Knochen enthaltenden Partien, wobei die Einspritznadeln weder in
den Körperhohlraum noch auf Knochen oder ins Leere treffen sollen, aber auch unterhalb eines Knochens liegende
Fleischpartien erreichen sollen. Das Ziel ist demnach
eine gleichmässige Verteilung der einzuspritzenden
Flüssigkeit im tierischen Körper, unter Anwendung eines
geringen Drucks, um die Fleischfaser nicht zu zerstören
und die Entstehung von aus der Flüssigkeit bestehenden
Blasen zu verhindern.

Das gezielte Spritzen bestimmter Fleischpartien, die
bei Geflügel örtlich auseinanderliegen, ist auch nur
mit örtlich auseinanderliegenden und individuell einstellbaren Einspritznadeln möglich, deren Abstände voneinander dem Körperbau des zu spritzenden Geflügels angepasst werden können. Bei bekannten Pökelspritzmaschinen mit einer Mehrzahl von nebeneinander und in Reihen
hintereinander angeordneten Einspritznadeln, die mittels
eines Rahmens oder Nadelkastens auf- und abbewegt werden
und mit denen ein gezieltes Einspritzen in örtlich getrennt voneinander liegende Fleischpartien nicht möglich
ist, ist jede Einspritznadel in Richtung ihrer Längsachse federnd in dem Rahmen abgestützt. Gegen die Wirkung
dieser Feder ist jede Einspritznadel relativ zum Rahmen
nach oben verschiebbar, wenn die Einspritznadel auf ein
Hindernis wie beispielsweise einen Knochen stösst, um
eine Beschädigung oder Zerstörung der Einspritznadel zu
verhindern. Mit der Abwärtsbewegung des Rahmens nimmt
die Federkraft bei der auf ein Hindernis stossenden Einspritznadel zu, was bei einem Tier mit relativ schwachen

- 4 -

Knochen unzweckmässig ist und bezüglich der aufzuwendenden Antriebsleistung einen Verlust darstellt.

Dieser Einsatz der Federn, die bei mittels eines Rahmens aktiv bewegten Einspritznadeln zu deren Absicherung notwendig sind, ist unzweckmässig, denn die am Ende der Hubbewegung den grössten Wert aufweisende Federkraft ist nutzlos. Jedoch lässt sich die Feder auch anders einsetzen und damit die Aufgabe lösen, das Einspritzen auf schonende Weise durchzuführen, ohne dass auf den von einer Einspritznadel getroffenen Knochen eine zunehmende Druckkraft ausgeübt wird. Dies geschieht dadurch, dass die Einspritznadeln für den aktiven Einspritzhub durch Federkraft bewegbar sind und die Hubbewegung während der Federentspannung durch eine der Federkraft entgegenwirkende Rückhaltekraft gesteuert ist. Hier ist demnach eine jeweils einer einzelnen oder auch mehreren Einspritznadeln zugeordnete Feder vorhanden, die bei Beginn des Einspritzens gespannt ist und die sich mit zunehmender Eindringtiefe in das Fleisch entspannt, was durch eine Rückhaltekraft gesteuert erfolgt. Bei der sich entspannenden Feder ist die Kraft zu Beginn des Einspritzens am grössten und nimmt mit zunehmender Eindringtiefe ab. Beim Auftreffen auf einen Knochen übt hierbei die Einspritznadel auch nicht einen anwachsenden Druck aus, sondern die entsprechend der Lage des Knochens einen kleineren Wert aufweisende Federkraft bleibt konstant. Die Feder bewirkt hierbei nicht nur den aktiven Einspritzhub sondern ersetzt auch die bei bekannten Maschinen mit einem niedergehenden Rahmen notwendige Feder an jeder einzelnen Einspritznadel, die deren Beschädigung beim Auftreffen auf ein Hindernis verhindern soll. Wenn man beispielsweise jeweils zwei Einspritznadeln eine den aktiven Einspritzhub herbeiführende Feder zuordnet, benötigt man für die Gesamtzahl aller vorhandenen Einspritznadeln im Vergleich zu einer herkömmlichen Pökelspritzmaschine nur die halbe Anzahl an Federn, die natürlich anders dimensioniert sind.

Mit der für den aktiven Einspritzhub erfolgenden Bewegung der einzelnen oder jeweils zweier Einspritznadeln mittels der Kraft jeweils einer Feder ist man nun in der Lage, die Aufgabe zu lösen, einen tierischen Körper mit örtlich getrennt voneinander liegenden, zu spritzenden Fleischpartien genau gezielt und dosiert zu spritzen, indem man eine Mehrzahl von örtlich getrennt voneinander angeordneten Führungen für jeweils mindestens eine Einspritznadel vorsieht und jede der Führungen individuell in verschiedene Richtungen schwenkbar und feststellbar ist. Dadurch können die Einspritznadeln nur auf die vorhandenen Fleischpartien ausgerichtet werden und insbesondere auch schräg einspritzen, sodass auch unterhalb von Knochen liegende Fleischpartien erreicht werden.

Das gezielte und dosierte Spritzen bestimmter Fleischpartien eines tierischen Körpers mittels individuell einstellbar geführter Einspritznadeln setzt nun aber voraus, dass die tierischen Körper immer gleich ausgerichtet bezüglich der Einspritznadeln positioniert werden, d.h., dass beispielsweise bei Geflügel von sämtlichen zu spritzenden tierischen Körpern die Schenkel und die Brust immer unter die individuell für diese Fleischpartien eingestellten Einspritznadeln zu liegen kommen. Zu diesem Zweck muss jeder tierische Körper auf einer speziellen Unterlage unverrückbar festgehalten sein. Eine solche Unterlage kann beispielsweise eine muldenartige, zweckmässigerweise für verschiedene Körpergrössen verstellbare Aufnahme sein, die in Mehrzahl vorhanden nacheinander unter die Einspritznadeln transportiert und weiterbewegt werden. Auf einem geradlinig
bewegten Förderband einer herkömmlichen Pökelspritzmaschine wären derartig aufmontierte Unterlagen zur
Aufnahme je eines tierischen Körpers jedoch hinderlich,
weil ein endloses Transportband am Ende der Förderstrecke über Umlenkrollen geführt ist und einen zurücklaufenden Trumm mit nach unten gerichteter Oberseite
besitzt. Aus diesem Grund war die Aufgabe, die tierischen
Körper unter die Einspritznadeln zu fördern, anders
zu lösen. Erreicht wird dies dadurch, dass die Unterlage und die relativ zu dieser für den Einspritzhub
in Führungen bewegbaren Einspritznadeln synchron im
Rundlauf um eine zentrale Achse bewegbar sind. Wenn eine
Mehrzahl von Führungen mit jeweils mindestens einer
in der Führung bewegbaren Einspritznadel zu einer Gruppe
zusammengefasst an einem Support befestigt sind, dann
kann die mindestens eine Einspritznadel der einen
Führung dem einen Schenkel des Geflügels zugeordnet
sein und die Einspritznadel einer anderen Führung dem
anderen Schenkel und weitere Einspritznadeln weiterer
Führungen der Brust etc. zugeordnet sein und alle Einspritznadeln werden gleichzeitig in Tätigkeit gesetzt.
Wenn ferner eine Mehrzahl von je eine Gruppe von Führungen tragenden Supporten um die zentrale Achse in
Winkelabständen verteilt an einem Drehtisch angeordnet
sind, der durch eine zur zentralen Achse koaxiale
vertikale Welle drehbar ist, dann können gleichzeitig
mehrere tierische Körper während des Rundlaufs gespritzt
werden, wobei jeder der tierischen Körper durch die an
jeweils einem der Supporte in den Führungen geführten
Einspritznadeln behandelt wird.

Weitere Vorteile und Einzelheiten der Erfindung ergeben sich aus der nachfolgenden Beschreibung und
den Zeichnungen, in denen eine Ausführungsform des
Erfindungsgegenstandes rein beispielsweise dargestellt ist. Es zeigen:

Fig. 1    die Vorrichtung als Pökelspritzmaschine,
          schematisch und in Seitenansicht;

Fig. 2    die Pökelspritzmaschine gemäss Fig. 1, in
          Draufsicht und ausschnittweise nur wichtige
          Teile zeigend;

Fig. 3    eine Draufsicht ähnlich Fig. 2, ausschnittweise und vorwiegend die Steuerkurven zeigend;

Fig. 4    ein einzelnes Einspritznadelpaar und dessen
          in beliebige Richtungen verstellbare Führung,
          in grösserem Masstab.

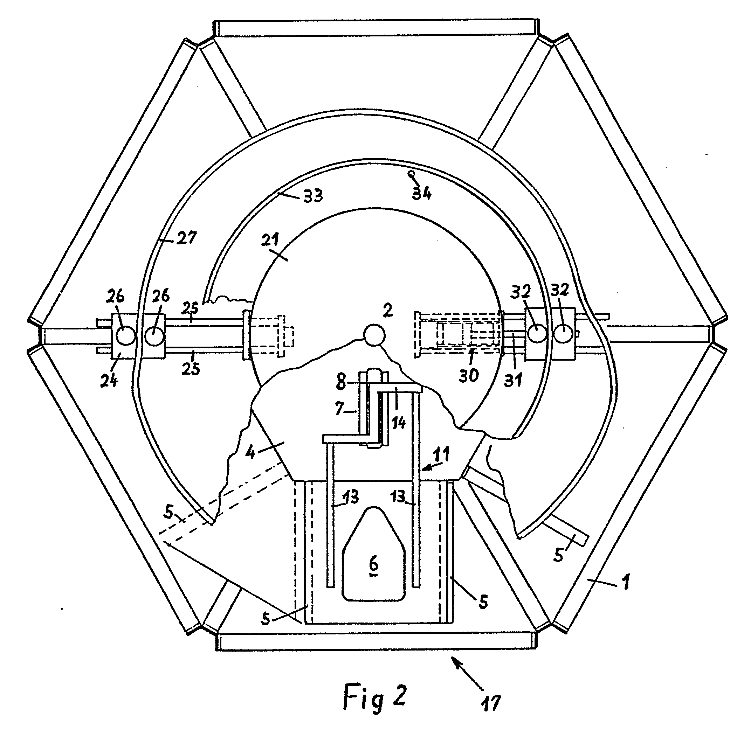

Im Zentrum eines Maschinengestells 1, das zentralsymmetrisch ausgebildet ist und dessen Umrissform gemäss Fig. 2 in Draufsicht ein regelmässiges Sechseck
bildet, ist eine vertikale Welle 2 drehbar gelagert.
Diese Welle 2 ist am oberen Ende durch einen auf dem
Maschinengestell 1 angeordneten, stufenlos regelbaren
Antrieb 3 angetrieben. Die Welle 2 trägt im unteren
Teil einen Drehtisch 4, der mit der Welle 2 umläuft
und durch dessen Zentrum sich die Welle hindurcherstreckt. Am äusseren Rand des Drehtisches 4 sind Haltearme 5 befestigt, von denen jeweils zwei zueinander
parallele Haltearme 5 eine muldenförmige Unterlage
oder Aufnahme 6 auswechselbar  tragen. Auf jeder dieser
Unterlagen 6  ist ein tierischer Körper wie beispielsweise ein Geflügel abgestützt und ist dabei bezüglich des Körperbaus immer in der gleichen Weise aufgelegt oder mit anderen Worten in Bezug auf die Mitte des Drehtisches 4 so positioniert, dass die zu spritzenden Fleischpartien wie Schenkel oder Brust etc. sich immer an der gleichen Stelle befinden, und zwar bei allen sechs Unterlagen 6, die in gleichen Winkelabständen am Umfang des Drehtisches 4 vorhanden sind, und von welchen Unterlagen in Fig. 2 zur Verdeutlichung nur eine dargestellt ist. Die Vorrichtung lässt sich auch nur mit einer Unterlage 6 benutzen, doch können bei diesem Ausführungsbeispiel der Maschine sechs Unterlagen 6 vorgesehen werden, um die Methode wirtschaftlich zu gestalten. Es können aber auch nur drei Unterlagen 6 vorgesehen werden oder bei Abänderung der Maschine mehr als sechs Unterlagen 6, die mit dem Drehtisch 4 umlafen.

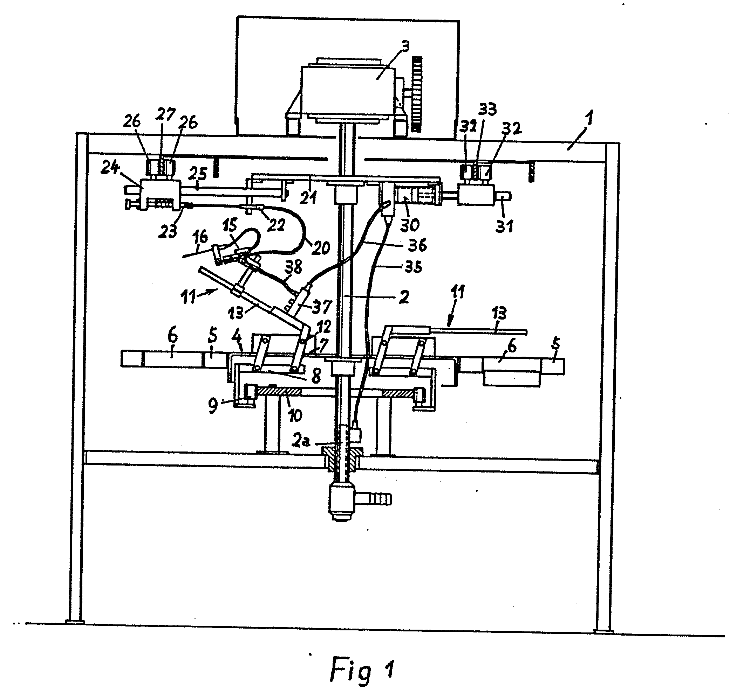

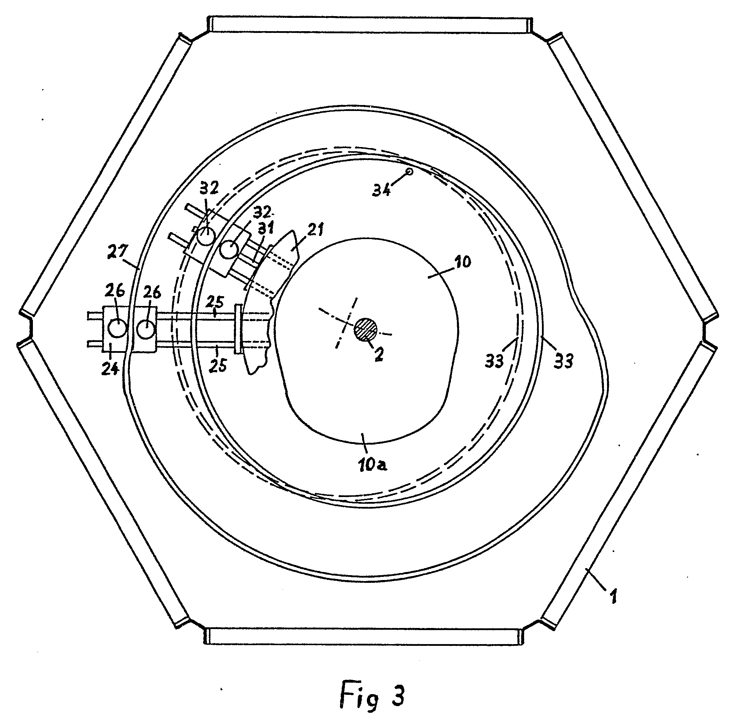

Durch den Drehtisch 4 erstreckt sich von dessen Unterseite zu dessen Oberseite durch eine entsprechende Ausnehmung 7 im Drehtisch 4 hindurch ein Hebelsystem 8, das an dem einen Ende unterhalb des Drehtisches 4 einen Wälzkörper 9 trägt, welcher am Umfang einer Kurvenscheibe 10 abrollt, die am Maschinengestell 1 fest angeordnet ist und die ringförmig ausgebildet ist, sodass sich die Welle 2 durch die Kurvenscheibe hindurcherstreckt. Die aus Fig. 3 erkennbare Umrissform der Kurvenscheibe 10 ist über den grössten Teil des Umfangs kreisförmig und besitzt einen radial weiter nach aussen sich erstreckenden Bereich 10a, der sich über einen Drehwinkelbereich des Drehtisches 4 erstreckt. In diesem Bereich wird über den Wälzkörper 9 und das Hebelsystem 8 ein am oberhalb des Drehtisches 4 am anderen Ende des Hebelsystems 8 befestigter Support 11 in die in Fig. 1 auf der linken
Seite gezeigte Schrägstellung verschwenkt. Während
der übrigen Umlaufbewegung liegt der Wälzkörper 9 an
dem kreisförmigen Umfangsbereich der Kurvenscheibe 10
an und nimmt der Support 11 eine im wesentlichen
horizontale Stellung gmäss Fig. 1 auf der rechten Seite
ein.

Der Support 11 ist demnach in vertikaler Richtung um
eine zum Hebelsystem 8 gehörende horizontale Achse 12
auf- und abschwenkbar. In Fig. 2 ist in Draufsicht nur
ein Support 11 der Unterlage 6 für den tierischen
Körper zugeordnet dargestellt, jedoch entspricht die
Anzahl der gesamt vorhandenen Supporte 11 der Anzahl
der vorhandenen Unterlagen 6 für einen tierischen
Körper, d.h. die Vorrichtung kann wahlweise bis zu
sechs Supporte und vorzugsweise diese sechs Supporte
aufweisen.

Jeder Support 11 besteht aus zwei zueinander parallelen
Achsen 13, die an ihrem der drehbaren Welle 2 zugewandten
Ende durch ein zweimal abgewinkeltes Verbindungsstück 14
starr miteinander verbunden sind. Dieses Verbindungsstück
14 ist an dem Hebelsystem 8 befestigt. Die Form des Winkelstücks 14 ergibt sich aus der Notwendigkeit, die auf
einem Kreis eng nebeneinander angeordneten Supporte 11
mit genügend Bewegungsspielraum unterzubringen.

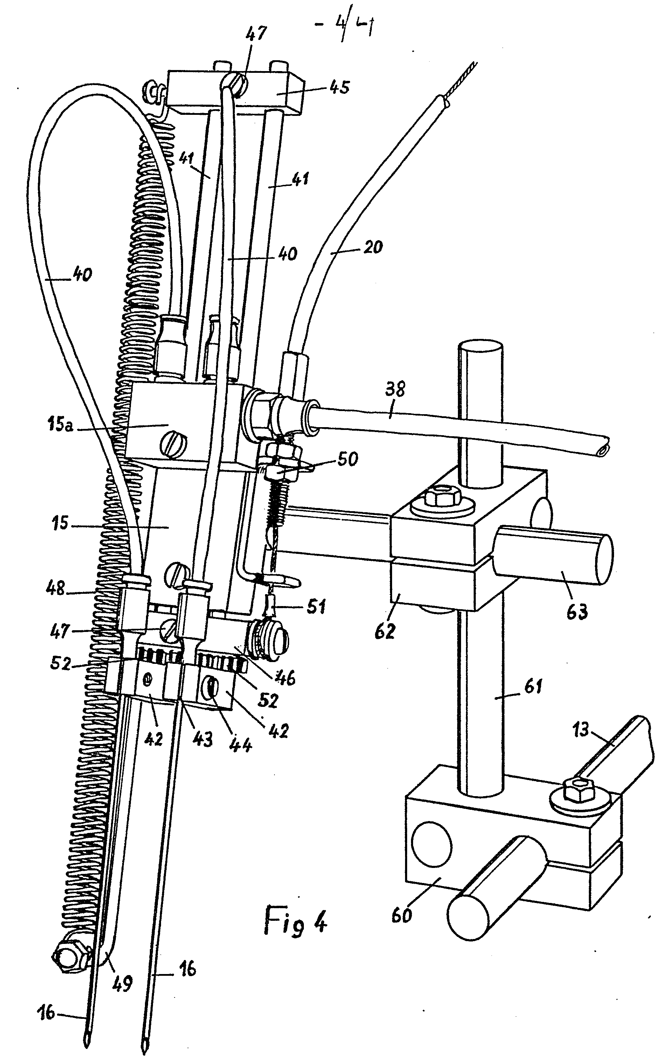

Auf jeder der Achsen 13 des Supports 11 sind eine oder
mehrere Führungen 15 mit jeweils mindestens einer beweglich darin geführten Einspritznadel 16 befestigt. Die
Anordnung und Ausgestaltung der Führung und der Einspritznadeln geht deutlicher aus Fig. 4 hervor und wird
im einzelnen weiter unten erläutert. Das wesentliche
Merkmal der bisher beschriebenen Einrichtung besteht zusammengefasst darin, dass der Support 11 mit einer
Mehrzahl von Einspritznadeln 16 synchron mit der
Unterlage 6 für einen tierischen Körper im Rundlauf
um die zentrale Achse, die von der Antriebswelle 2
für den Drehtisch 4 gebildet wird, bewegt werden,
wobei der durch die Kurvenscheibe 10 gesteuerte Support
11 in einem Drehwinkelbereich hochgeschwenkt ist und
in diesem Bereich die in Fig. 2 mit 17 bezeichnete
Beschickungs- und Entnahmestation liegt. Dabei ist
angenommen, dass der in Fig. 3 eingezeichnete,
radial weitervorspringende Kurvenscheibenbereich 10a
auch in Fig. 2 an der gleichen Stelle liegt, in
welcher Figur die Kurvenscheibe nicht erkennbar ist.
Ausserdem sind in Fig. 2 zur Verdeutlichung der
Zeichnung weder Führungen 15 noch Einspritznadeln 16
eingezeichnet und ist der Support 11 nicht in einer
hochgeschwenkten Stellung dargestellt, wie sie aus
Fig. 1 auf der linken Seite hervorgeht.

In der niedergeschwenkten Stellung des Supports 11 befinden sich die Enden der Einspritznadeln 16 dicht
vor dem zu spritzenden tierischen Körper. Der aktive
Einspritzhub, bei dem die Einspritznadeln in das
Fleisch eindringen, erfolgt dann durch das Entspannen
einer in Fig. 1 nicht dargestellten Feder, wobei diese
Hubbewegung der Einspritznadel während der Federentspannung durch eine der Federkraft ent-gegenwirkende Rückhaltekraft gesteuert ist. Diese Rückhaltekraft wird
durch einen Bowdenzug 20 ausgeübt, dessen eines Ende
an der Führung 15 für die mindestens eine Einspritznadel 16 angreift und dessen anderes Ende während
des Umlaufs des Supports 11 kurvengesteuert betätigt
wird. Zu diesem Zweck ist an der vertikalen Welle 2
eine zum Drehtisch 4 parallele, mit der Welle 2 umlaufende Befestigungsplatte 21 befestigt, an deren Rand
das Hüllschlauchende 22 des Bowdenzugs 20 befestigt
ist, während das Drahtzugende 23 des Bowdenzugs 20
an einer Halterung 24 befestigt ist, die auf zwei
Führungsstangen 25 hin- und herbewegbar ist, wobei
diese Führungsstangen 25 ebenfalls am Rand der Befestigungsplatte 21 fest montiert sind. Die beiden
zueinander parallelen Führungsstangen 25 sind in
Fig. 2 und 3 dargestellt. An der Halterung 24 sind
die Drahtzugenden 23 sämtlicher Bowdenzüge 20 befestigt, die die Verbindung zu den an einem Support
11 vorhandenen Führungen 15 herstellen, d.h. beispielsweise vier bis sechs Bowdenzüge 20, die gemeinsam
betätigt werden. An der Halterung 24 sind ferner zwei
Wälzkörper 26 befestigt, die zu beiden Seiten gegen
eine Steuerschiene 27 anliegen. Diese Steuerschiene
27 ist am Maschinengestell 1 fest angeordnet und ihre
Umrissgestalt geht aus den Fig. 2 und 3 hervor. Sie
hat über einen Winkelbereich von etwa 180° einen
nahezu konstanten Krümmungsradius und in dem übrigen
Bereich ist der radiale Abstand der Steuerschiene
von der zentralen Achse grösser, mit einem allmählichen
Uebergang zwischen diesen Bereichen. Mit der umlaufenden Befestigungsplatte 21 werden sämtliche mitumlaufenden Bowdenzüge durch die an der Steuerschiene 27 entlang bewegte Halterung 24 für die Drahtzugenden 23
der Bowdenzüge betätigt, wobei während einer Umdrehung
in einem Teilbereich die Bowdenzüge unter der Wirkung
der in Fig. 1 bis 3 nicht dargestellten, an den Einspritznadeln 16 angreifenden Federn, die den aktiven
Einspritzhub bewirken, die Bowdenzüge gesteuert, d.h.
stetig zunehmend freigegeben werden, wenn sich die Befestigungsplatte 21 mit den Bowdenzügen im Uhrzeigersinn dreht, da die Steurschiene 27 nicht konzentrisch
zur drehbaren Welle angeordnet ist. Dabei dringen die Einspritznadeln 16 allmählich tiefer in das zu spritzende Fleisch ein. Anschliessend werden die Einspritznadeln
aufgrund der Form der Steuerschiene 27 allmählich aus
dem Fleisch wieder herausgezogen und verbleiben während
annähernd der übrigen Hälfte der Umdrehung in der
Stellung ausserhalb des Fleisches, um die Entnahme des
fertig gespritzten tierischen Körpers und die neue
Beschickung an der dafür vorgesehenen Entnahme- und Beschickungsstation 17 zu ermöglichen.

Zur Versorgung der Einspritznadeln 16 mit der einzuspritzenden Flüssigkeit wie beispielsweise Lake ist
jedem Support 11, der eine Mehrzahl von Einspritznadeln
16 trägt, jeweils eine Kolbenpumpe 30 zugeordnet. Diese
Kolbenpumpen 30 sind ebenfalls in Winkelabständen gleichmässig verteilt entsprechend der Anzahl der vorhandenen
Supporte 11 an der Befestigungsplatte 21 angeordnet,
sodass sie mit der Welle 2 umlaufen. Zur Verdeutlichung
der Zeichnung ist in den Zeichnungen ebenfalls nur eine
Kolbenpumpe 30 dargestellt. Die Kolbenstangen 31 werden
nach dem gleichen Prinzip wie die Bowdenzüge 20 betätigt.
Zu diesem Zweck trägt die Kolbenstange 31 zwei Wälzkörper 32, die zu beiden Seiten gegen eine Steuerschiene
33 anliegen. Die Steuerschiene 33 ist von der Steuerschiene 27 getrennt dicht unterhalb dieser ebenfalls am
Maschinengestell 1 gehalten, aber nicht fest angeordnet.
Die Steuerschiene 33 ist vielmehr als Ganzes um eine zu
der drehbaren Welle 2 im Abstand parallele Achse 34, die
in Fig. 2 erkennbar ist, in einer zur Welle 2 senkrechten
Ebene nach links oder nach rechts verschwenkbar und
nimmt dann eine in Fig. 3 in gestrichelten Linien eingezeichnete Stellung ein. In der in Fig. 3 in ausgezogenen
Linien gezeigten Stellung der kreisringförmigen Steuerschiene 33 ist diese konzentrisch zu der drehbaren Welle 2
angeordnet, sodass bei dieser Stellung kein Pumpenhub
in den im konstanten radialen Abstand von der Welle 2 umlaufenden·Pumpen 30 herbeigeführt werden würde.
Da die Kurvenschiene 33 insgesamt um die zur Welle 2
sich parallel erstreckende Achse 34 in einer zur Welle
2 senkrechten Ebene verschwenkbar ist, lässt sich die
Exzentrizität der Steuerschiene 33 bezüglich der Welle 2
in einem bestimmten Bereich stufenlos verändern, sodass bei einer Stellung der Steuerschiene 33, die
in Fig. 3 als ein mögliches Beispiel mit gestrichelten Linien eingezeichnet ist, die Kolbenstange 31
der Pumpe 30 während eines Umlaufs einen Hin- und
Herhub ausführt. Durch diese Verstellung der Steuerschiene 33 kann die Pumpenleistung der je nach der
Tiergrösse erforderlichen Menge an einzuspritzender
Flüssigkeit angepasst werden, sodass genau dosiert
gespritzt werden kann. In Fig. 1 und 2 sind die die
Bowdenzüge 20 steuernden Elemente und die die Pumpe
30 steuernden Elemente mit Bezug auf die Rundlaufbewegung auf gegenüberliegenden Seiten dargestellt, damit
die Zeichnung nicht unübersichtlich wird. In Wirklichkeit gehört zu jedem der sechs Supporte 11, die diese
Maschine aufweisen kann, jeweils eine oberhalb von
einem Support angeordnete Steuereinrichtung für die
Bowdenzüge 20 und eine direkt daneben angeordnete
Steuereinrichtung für die Pumpe 30, wie aus Fig 3 ersichtlich ist.

Um sämtliche umlaufenden Pumpen 30 mit der zu spritzenden Flüssigkeit zu versorgen, ist die vertikale Welle 2
in einem unteren Abschnitt als Hohlwelle 2a ausgebildet,
sodass die Welle in diesem Abschnitt als Drehdurchführung die Aufgabe der Zuleitung zu sämtlichen Kolbenpumpen 30 übernimmt, die über Schläuche 35 an den Hohlwellenabschnitt 2a angeschlossen sind. Von jeder der
Kolbenpumpen 30 führt jeweils eine Leitung 36 zu jeweils
einem auf jedem der Supporte 11 angeordneten Verteilerblock 37. Von dem Verteilerblock 37 gelangt die einzuspritzende Flüssigkeit über Leitungen 38, von welchen
in Fig. 1 nur eine dargestellt ist, zu den auf einem
Support 11 vorhandenen Einspritznadeln 16.

Aus Fig. 4 geht hervor, dass die Leitung 38 an die
Führung 15 angeschlossen ist, die zur Führung von
zwei Einspritznadeln 16 für deren aktiven Einspritzhub dient. Die Führung 15 ist im oberen Teil 15a als
Verteilergehäuse ausgebildet, an das zwei Leitungen 40
angeschlossen sind, die zu jeder der Einspritznadeln
16 führen. Jede der Einspritznadeln 16 ist an einer
Schubstange 41 befestigt, die an einer in der Zeichnung
nicht sichtbaren Bohrung in der Führung 15 auf- und
abbewegbar ist. Am unteren Ende trägt jede Schubstange
41 eine Scheibe 42 mit einem Klemmschlitz 43, in
welchem die Einspritznadel 16 mit Hilfe einer Klemmschraube 44 festgeklemmt ist, sodass jede Einspritznadel im Abstand parallel zu der Schubstange 41 gehalten ist. Die Schubstange 41 bildet die in der Führung 15 geführte Nadelhalterung, an der der Bowdenzug
20 angreift. Beide Schubstangen 41 sind am oberen Ende
durch ein Querjoch 45 und am unteren Ende oberhalb
der Klemmscheibe 42 durch ein Querjoch 46 miteinander
verbunden und durch je eine Klemmschraube 47 sind die
Schubstangen 41 in jedem Querjoch gegen Drehung gesichert festklemmbar. Der aktive Einspritzhub, bei dem
die Einspritznadeln 16 in das zuspritzende Fleisch
eindringen, wird durch eine kräftige Schraubenfeder 48
ausgelöst, gegen deren Federkraft der Bowdenzug 20
eine Rückhaltekraft ausübt, sodass die Feder 48 sich
nur allmählich entspannen kann. Die Feder 48 ist mit
dem einen Ende am oberen Querjoch 45 und mit dem anderen Ende an einer an der Führung 15 befestigten und
von dieser nach unten sich erstreckenden Verlängerung 49 befestigt, sodass die Feder 48 die in der Führung 15 geführten Schubstangen nach unten zieht.
Das Hüllschlauchende 50 des Bowdenzugs 20 ist an
der Führung 15 befestigt und das Drahtzugende 51
des Bowdenzugs 20 ist an dem unteren Querjoch 46
befestigt, sodass der durch eine Kurvenbahn gesteuerte Bowdenzug 20 die Schubstangen 41 gesteuert
sich nach unten bewegen lässt. Ferner dient der
Bowdenzug 20 zum Zurückziehen der Einspritznadeln
16, wobei die Feder 48 wieder gespannt wird.

Um den Abstand der beiden Einspritznadeln 16 voneinander verändern zu können, ist an jeder Schubstange 41
zwischen dem Querjoch 46 und der zur Befestigung
der Einspritznadel dienenden Befestigungsscheibe 42
jeweils ein Zahnrad 52 befestigt. Beide Zahnräder 52
stehen miteinander in Eingriff. Wenn nach Lösen der
Klemmschraube 47 in dem Querjoch 45 und 46 eine
Schubstange 41 gedreht wird, verändert sich der gegenseitige Abstand der Einspritznadeln 16, da diese
bezüglich der Achse der Schubstange 41 bzw. des Zahnrads 52 exzentrisch befestigt sind. Durch Festziehen
der Klemmschrauben 47 werden die Einspritznadeln
dann im eingestellten Abstand festgehalten. An einer
Führung 15 kann selbstverständlich auch nur eine
Einspritznadel oder können mehr als zwei Einspritznadeln angeordnet sein, soweit die Kraft der Feder 48
dazu ausreicht, den aktiven Einspritzhub zu bewirken.
Der Vorteil dieser Ausgestaltung besteht darin, dass
die Federkraft zu Beginn des Einstechens der Einspritznadeln am grössten ist und mit zunehmender Eindringtiefe abnimmt, dass die Einspritznadeln beim Auftreffen auf ein Hindernis nicht mit zunehmender Kraft
beansprucht werden, wie bei bekannten Pökelspritzmaschinen und dass vor allem durch die Einzelanordnung oder paarweise Anordnung der Einspritznadeln örtlich voneinander getrennte Fleischpartien eines
zu spritzenden tierischen Körpers gezielt und genau
dosiert gespritzt werden können.

Zu diesem Zweck sind mehrere der in Fig. 4 dargestellten Einspritznadelpaare getrennt voneinander
an einem Support angeordnet, der aus einer oder vorzugsweise zwei zueinander parallelen Tragachsen 13
besteht, an denen eine Mehrzahl von Einspritznadelpaaren gemäss Fig. 4 derart festklemmbar sind, dass
sie in jede beliebige Richtung schwenkbar und in
dieser Stellung arretierbar sind.

Um die Verschwenkbarkeit der Einspritznadeln 16 in
alle Richtungen zu erreichen, ist an der Tragachse
13 mittels eines Klemmstücks 60 eine weitere Achse
61 befestigt, die sich senkrecht zu der Tragachse 13
erstreckt. An dieser Achse 61 ist wiederum mittels
eines Klemmstücks 62 eine weitere Achse 63 befestigt,
an deren Ende die Führung 15 für die Einspritznadeln
16 fest angeordnet ist. Durch diese Anordnung der
Führung 15 an der dritten von drei jeweils senkrecht
zueinander, entsprechend den drei Richtungen des
Raums, angeordneten Achsen 13, 61 und 63, lässt sich
die Führung 15 gleichzeitig in drei Ebenen verschwenken und mit Hilfe der Klemmstücke 60 und 62 in jeder
beliebigen Stellung arretieren. Die Einspritznadeln 16
können daher jede beliebige Richtung in Bezug auf einen
auf einer Unterlage aufliegenden tierischen Körper
einnehmen und in schräger Richtung einspritzen und
damit auch unterhalb von Knochen liegende Fleischpartien erreichen.

In Fig. 4 ist zur Vereinfachung der Darstellung nur
eine an der Tragachse 13 befestigte und aus einer vertikalen Achse 61, einer sich daran anschliessenden horizontalen Achse 63 sowie einer an dieser befestigten
Führung mit den Einspritznadeln bestehende Einheit
dargestellt. An der horizontalen Tragachse 13 sind
jedoch mehrere dieser Einheiten im Abstand hintereinander angeordnet und jede dieser Einheiten erlaubt die individuelle Verstellung der Einspritznadeln
16. Ausserdem sind zwei Tragachsen 13 im Abstand
parallel zueinander starr miteinander verbunden und
bilden zusammen einen auf- und abschwenkbaren Support,
der in der hochgeschwenkten Stellung ermöglicht, den
tierischen Körper nach dem Spritzen wegzunehmen und
einen noch unbehandelten Körper unter die Einspritznadeln zu legen, was innerhalb einer Maschine in
einer Beschickungs- und Entnahmestation erfolgt.

Die Einzelanordnung oder paarweise Anordnung von Einspritznadeln an einer Führung, die in alle Richtungen
verschwenkbar und feststellbar ist, kann auch an
einer herkömmlichen Pökelspritzmaschine zum Einsatz
gelangen oder an einer anderen, hier nicht beschriebenen und noch zu konstruierenden Vorrichtung, wenn geeignete Steuer- und Betätigungselemente vorgesehen
werden. Ebenso kann die Betätigung der Einspritznadeln
für deren aktiven Einspritzhub durch die Kraft einer
sich entspannenden Feder auch an einer anderen, hier
nicht beschriebenen Vorrichtung zur Anwendung gelangen,
wobei auch andere, hier nicht beschriebene Steuerelemente benutzt werden können.

Max Hübner AG

P a t e n t a n s p r ü c h e

1. Vorrichtung zum Einspritzen von Flüssigkeit,
wie beispielsweise Lake, in tierische Körper mittels
Einspritznadeln, die relativ zu dem auf einer Unterlage abgestützten tierischen Körper bewegt werden,
dadurch gekennzeichnet, dass die Unterlage (16) und
die relativ zu dieser für den Einspritzhub in Führungen (15) bewegbaren Einspritznadeln (16) synchron
im Rundlauf um eine zentrale Achse (2) bewegbar sind.

2. Vorrichtung nach Anspruch 1, dadurch gekennzeichnet, dass eine Mehrzahl von Führungen (15) mit
jeweils mindestens einer in der Führung (15) bewegbaren Einspritznadel (16) zu einer Gruppe zusammengefasst an einem Support (11) befestigt sind und dass
eine Mehrzahl von je eine Gruppe von Führungen (15)
tragenden Supporten (11) um die zentrale Achse (2)
in Winkelabständen verteilt an einem Drehtisch (4)
angeordnet sind, der durch eine zur zentralen Achse
koaxiale vertikale Welle (2) drehbar ist.

3. Vorrichtung nach Anspruch 2, dadurch gekennzeichnet, dass wahlweise bis zu sechs Supporte (11)
am Drehtisch (4) angeordnet sind.

4. Vorrichtung nach Anspruch 2, dadurch gekennzeichnet, dass jeder Support (11) in einer bezüglich
der zentralen Achse (2) radialen und vertikalen Ebene
schwenkbar ist und während des Umlaufs um die zentrale
Achse durch Steuerglieder (8, 9, 10) gesteuert verschiedene Schwenkstellungen einnimmt, die unterschiedlichen Abständen des Supports (11) von der
Unterlage (6) für den tierischen Körper entsprechen,
und dass im Drehwinkelbereich des Drehtisches (4),
in welchem jeder Support (11) in eine obere, den
grössten Abstand von der Unterlage (6) aufweisende
Stellung geschwenkt ist, eine Beschickungs- und
Entnahmestation (17) für kontinuierlich zu- und abgeführte tierische Körper vorgesehen ist.

5. Vorrichtung nach Anspruch 2, dadurch gekennzeichnet, dass der Drehtisch (4) die Abstützung für
die tierischen Körper bildet und muldenartige Unterlagen (6) zur Aufnahme je eines tierischen Körpers
trägt.

6. Vorrichtung nach Anspruch 2 und 4, dadurch
gekennzeichnet, dass die den Drehtisch (4) tragende
vertikale Welle (2) im Zentrum eines Maschinengestells (1) drehbar gelagert und durch einen regelbaren Motor (3) angetrieben ist, dass die Welle (2)
sich durch eine ringförmige und parallel zum Drehtisch (4) am Maschinengestell (1) fest angeordnete
Kurvenscheibe (10) hindurcherstreckt, deren in Umfangsrichtung aufeinanderfolgende Umfangsbereiche
unterschiedlich grosse radiale Abstände von der Welle
(2) aufweisen und welche Kurvenscheibe (10) ein mit
einem Wälzkörper zum Zusammenwirken mit der Kurvenscheibe (10) versehenes Hebelsystem (8) steuert, das
mit dem umlaufenden, die Einspritznadeln (16) tragenden Support (11) verbunden ist und die Steuerglieder
(8) zum Verschwenken des Supports (11) in verschiedene Schwenkstellungen bildet.

7. Vorrichtung nach Anspruch 2, dadurch gekennzeichnet, dass an der vertikalen Welle (2) eine zum Drehtisch (4) parallele mit der Welle (2) umlaufende Befestigungsplatte (21) befestigt ist, die eine der vorhandenen Anzahl der Supporte (11) entsprechende Anzahl von Kolbenpumpen (30) für die Versorgung der Einspritznadeln (16) mit der einzuspritzenden Flüssigkeit trägt, dass die Kolbenstangen (31) sämtlicher Pumpen (30) mittels mit jeder der Kolbenstangen (31) verbundener Wälzkörper (32), die an einer nicht umlaufenden, am Maschinengestell (1) angeordneten ringförmigen Steuerschiene (33) abrollen, für einen Förderhub hin- und herbewegbar sind, und dass die im radialen Abstand die Welle (2) umschliessende Steuerschiene (33) kreisringförmig ausgebildet ist und um eine im Abstand von der Welle (2), parallel zu dieser angeordnete Achse (34) in einer zur Welle (2) senkrechten Ebene verschwenkbar und feststellbar ist, wodurch die Exzentrizität der Steuerschiene (33) bezüglich der Welle (2) in einem Bereich stufenlos veränderbar einstellbar ist, um den Förderhub der im konstanten radialen Abstand von der Welle (2) umlaufenden Pumpen (30) unterschiedlich einstellen zu können.

8. Vorrichtung nach Anspruch 2 und 7, dadurch gekennzeichnet, dass eine die Welle (2) im radialen Abstand umschliessende Steuerschiene (27) für die Steuerung der Hubbewegung der Einspritznadeln (16) am Maschinengestell (1) fest angeordnet ist, dass aufeinanderfolgende Umfangsbereiche der Steuerschiene (27) unterschiedlich grosse radiale Abstände von der Welle (2) aufweisen und dass die mindestens eine in jeder der Führungen (15) beweglich geführte Einspritznadel (16) durch einen Bowdenzug (20) betätigbar ist und sämtliche Bowdenzüge (20) der Einspritznadeln (16), die in den an jeweils einem Support (11) angeordneten Führungen (15) geführt sind, mit ihren Bowdenzug-Hüllschlauchenden (22) an der mit der Welle (2) umlaufenden Befestigungsplatte (21) an deren Rand festgehalten sind und mit dem Drahtzugende (23) an einer in der Art eines Stössels hin- und herbewegbaren Halterung (24) für die gemeinsame Betätigung befestigt sind, dass die Halterung (24) auf am Rand der Befestigungsplatte (21) fest montierten Führungsstangen (25) hin- und herbewegbar ist und an der Halterung (24) Wälzkörper (26) zum Zusammenwirken mit der Steuerschiene (27) angeordnet sind, durch die bei der Umlaufbewegung sämtliche Bowdenzüge (20) der Einspritznadeln (16) jedes der Supporte (11) gleichsinnig betätigt werden.

9. Vorrichtung nach Anspruch 7, dadurch gekennzeichnet, dass die im Zentrum des Maschinengestells (1) drehbar gelagerte Welle (2) mindestens in einem Abschnitt als Hohlwelle (2a) ausgebildet ist und als Drehdurchführung die gemeinsame Zuleitung für die Versorgung sämtlicher Kolbenpumpen (30) mit der einzuspritzenden Flüssigkeit aufnimmt und an die Hohlwelle (2a) sämtliche Kolbenpumpen (30) über Schläuche (35) angeschlossen sind.

10. Vorrichtung nach Anspruch 1, dadurch gekennzeichnet, dass die Einspritznadeln (16) für den aktiven Einspritzhub durch Federkraft bewegbar sind und die Hubbewegung während der Federentspannung durch eine der Federkraft entgegenwirkende Rückhaltekraft gesteuert ist.

11. Vorrichtung nach Anspruch 10, dadurch gekennzeichnet, dass die Rückhaltekraft eine durch die Hubbewegung eines durch eine Steuerschiene (27) gesteuerten Stössels (24) erzeugte Zugkraft ist, die durch einen jeweils mindestens einer Einspritznadel (16) zugeordneten Bowdenzug (20) auf die Einspritznadel (16) übertragen wird.

12. Vorrichtung nach Anspruch 10, dadurch gekennzeichnet, dass die Federkraft von einer Zugfeder (48) erzeugt ist, deren eines Ende an einer in einer Führung (15) bewegbar geführten Nadelhalterung (41) und deren anderes Ende an der Führung (15) angreift.

13. Vorrichtung nach Anspruch 12, dadurch gekennzeichnet, dass jeweils paarweise parallel nebeneinander in je einer Führung (15) geführten Einspritznadeln (16) jeweils eine Zugfeder (48) zugeordnet ist und dass der Abstand der parallelen Einspritznadeln (16) veränderbar ist.

14. Vorrichtung nach Anspruch 13, dadurch gekennzeichnet, dass jede Einspritznadel (16) an einer in der Führung (15) verschieblich geführten, die Nadelhalterung bildenden Schubstange (41) im Abstand parallel zu deren Achse befestigt ist, dass in einer Führung (15) zwei parallele Schubstangen (41) verschieblich geführt sind und dass der gegenseitige Abstand der Einspritznadeln (16) durch ein auf den beiden Schubstangen (41) fest angeordnetes, in Eingriff stehendes Zahnradpaar (52) aufgrund der zu dem jeweiligen Zahnrad (52) exzentrischen Befestigung der Einspritznadel (16) veränderbar ist, wobei die durch gegensinniges Drehen der beiden in Eingriff stehenden Zahnräder (52) sich jeweils

- 6 -

auf einem Kreisbogen um die Achse der Schubstange (41) bewegenden Einspritznadeln (16)einander nähern oder voneinander entfernen.

15. Vorrichtung nach Anspruch 14, dadurch gekennzeichnet, dass die zwei parallelen Schubstangen (41) an den entgegengesetzten Enden durch je ein Querjoch (45, 46) miteinander verbunden und gegen Drehung gesichert festklemmbar sind und dass an dem einen Querjoch (45) die Zugfeder (48) und an dem anderen Querjoch (46) der Bowdenzug (20) angreift.

16. Vorrichtung nach Anspruch 1, dadurch gekennzeichnet, dass in einer Mehrzahl von separaten Führungen (15) jeweils mindestens eine Einspritznadel (16) für deren Hubbewegung geführt ist und dass jede der Führungen (15) individuell in verschiedene Richtungen schwenkbar und feststellbar ist.

17. Vorrichtung nach Anspruch 16, dadurch gekennzeichnet, dass jede der Führungen (15) in drei den drei Richtungen des Raums entsprechenden, zueinander senkrechten Ebenen jeweils individuell schwenkbar und in jeder Stellung feststellbar ist.

18. Vorrichtung nach Anspruch 17, dadurch gekennzeichnet, dass drei jeweils senkrecht zueinander, entsprechend den drei Richtungen des Raums, angeordnete Achsen (13, 61, 63), von denen keine parallel zu den anderen ist, jeweils durch Klemmstücke (60, 62) miteinander verbunden sind, in denen jeweils zwei Achsen verdrehbar und festklemmbar sind, und dass die Führung (15) für die Einspritznadel (16) an der dritten (63) der drei Achsen (13, 61, 63) befestigt ist.

19. Vorrichtung nach Anspruch 18, dadurch gekennzeichnet, dass an der ersten (13), im wesentlichen sich horizontal erstreckenden Achse (13) mehrere, jeweils aus einer vertikalen zweiten (61) und einer horizontalen dritten Achse (63) und einer an letzterer befestigten Führung (15) mit einem Einspritznadelpaar (16) bestehende Einheiten im Abstand hintereinander befestigt sind und dass mindestens zwei erste Achsen (13) parallel zueinander angeordnet und miteinander verbunden sind und einen beweglichen Support (11) bilden.

0127032

- 1/4

Fig 1

- 2/4

Fig 2

Fig 3

Fig 4

0127032